# EUROPEAN PATENT SPECIFICATION

(11) **EP 4 357 885 B1**
(45) Date of publication and mention of the grant of the patent: **10.09.2025**
(21) Application number: 22203143.7
(22) Date of filing: 21.10.2022
(51) Int. Cl.: G06F 3/01, G01S 17/88, G01S 17/89, G06F 18/24, G06V 10/764, G06V 20/20

(54) **APPARATUS, METHODS AND COMPUTER PROGRAMS FOR CLASSIFYING OBJECTS**
VORRICHTUNG, VERFAHREN UND COMPUTERPROGRAMME ZUR KLASSIFIZIERUNG VON OBJEKTEN
APPAREIL, PROCÉDÉS ET PROGRAMMES INFORMATIQUES POUR CLASSER DES OBJETS

(43) Date of publication of application: 24.04.2024
(73) Proprietor: Nokia Technologies Oy, 02610 Espoo (FI)
(72) Inventor: McDonald, Rory, Cambridge, CB22 4PN (GB); Wright, Christopher, CH-1015 Lausanne (CH); Zheng, Mingde, New Providence, 07974 (US)
(74) Representative: Swindell & Pearson Limited

(56) References cited:
- US-A1- 2021 216 793
- US-A1- 2022 092 854
- SHIMA RYUSEI ET AL: "Object classification with deep convolutional neural network using spatial information", 2017 INTERNATIONAL CONFERENCE ON INTELLIGENT INFORMATICS AND BIOMEDICAL SCIENCES (ICIIBMS), IEEE, 24 November 2017 (2017-11-24), pages 135 - 139, XP033313848, DOI: 10.1109/ICIIBMS.2017.8279704
- SHAABANA ALA ET AL: "Portable Electromyography: A Case Study on Ballistic Finger Movement Recognition", IEEE SENSORS JOURNAL, IEEE, USA, vol. 19, no. 16, 15 August 2019 (2019-08-15), pages 7043 - 7055, XP011735555, ISSN: 1530-437X, [retrieved on 20190716], DOI: 10.1109/JSEN.2019.2908312

## Description

### TECHNOLOGICAL FIELD

Examples of the disclosure relate to apparatus, methods and computer programs for classifying objects. Some relate to apparatus, methods and computer programs for classifying objects using data obtained from mediated reality devices.

### BACKGROUND

Mediated reality devices such as headsets can be used to consume augmented reality applications or virtual reality applications. A user of the mediated reality devices could also be interacting with real world objects. For example, a user could be holding or touching a real-world object while they are using a mediated reality device. If a user is interacting with a real-world object it can be useful for the mediated reality device to classify the object.

US 2022/092854 A1 relates to labeling 3-dimensional (3D) models and, more particularly, to a system and method for labeling 3D models using virtual and/or augmented reality systems. In some embodiments, machine learning may be used to classify objects based on LiDAR data. The system can also receive user input by tracking hand gestures.

US 2021/216793 A1 relates to techniques for improving "computer vision" by for example, increasing the accuracy of object detection and/or increasing the trainability of a machine-learning model. The techniques can involve classifying objects based on LiDAR data.

Shima Ryusei et al.: "Object classification with deep convolutional neural network using spatial information", 2017 International Conference on Intelligent Informatics and Biomedical Sciences, IEEE, 24 November 2017, pp. 135-139, XP033313848, DOI: 10.1109/ICIIBMS.2017.8279704 relates to classifying objects from Kinect (RTM) depth images. The classification results are combined with electromyography signals to operate a prosthetic limb.

Shaabana Ala et al.: "Portable Electromyography: A Case Study on Ballistic Finger Movement Recognition", IEEE Sensors Journal, IEEE, USA, vol. 19, No. 16, 15 August 2019, pp. 7043-7055, XP011735555, ISSN: 1530-437X, DOUI: 10.1109/JS*EN* relates to using gesture recognition from electromyography signals as an alternative to recognition from vision.

### BRIEF SUMMARY

According to various, but not necessarily all, examples of the disclosure there may be provided an apparatus comprising means for:
obtaining LiDAR data from a mediated reality device wherein the mediated reality device is used by a user and the LiDAR data comprises data points representing at least part of an object;
obtaining position data relating to a position of the user's hand relative to the at least part of the object;
obtaining interaction data indicating how the user's hand is interacting with the at least part of the object wherein at least some of the interaction data is obtained from an electromyography device coupled to the user; and
using the position data to map the interaction data to the LiDAR data to enable the interaction data to be used to classify the at least part of the object.

The classification of the at least part of the object may comprise at least one of; a type of the at least part of the object, a function of the at least part of the object, or a configuration of the at least part of the object.

The classification of the at least part of the object may be used to control rendering of one or more mediated reality functions by the mediated reality device.

The rendering of the mediated reality functions may comprise at least one of: controlling a respective position of one or more displayed mediated reality images relative to the position of the at least part of the object, controlling scaling of one or more mediated reality images relative to the position of the at least part of the object, displaying one or more mediated reality images relating to the user's interaction with the at least part of the object, providing a user input region at a location relative to the at least part of the object; preventing user inputs at a location relative to at the at least part of the object.

At least one of the scaling or the positioning of the one or more mediated reality images can be performed using a latent space transformation of the object that transforms a representation of the object from a first object to a target object.

The mediated reality images may comprise information relating to the classification of the at least part of the object.

The position data may be obtained from at least one of an inertial measurement unit, or LiDAR data.

The interaction data may also obtained from at least one or more of: wearable strain gauges coupled to a part of the user, light sensors.

The interaction with the at least part of the object may comprise at least one of: the user touching the at least part of the object, the user applying a force to the at least part of the object, the user moving the at least part of the object, the user holding the at least part of the object, the user gripping the at least part of the object.

The means may be for obtaining interaction data for a plurality of parts of the object and using corresponding position data to enable classification of the plurality of parts of the object.

According to various, but not necessarily all, examples of the disclosure, there may be provided a device comprising an apparatus as described herein.

The device may comprise at least one of; a mediated reality device, a user electronic device.

According to various, but not necessarily all, examples of the disclosure, there may be provided a method comprising:
obtaining LiDAR data from a mediated reality device wherein the mediated reality device is used by a user and the LiDAR data comprises data points representing at least part of an object;
obtaining position data relating to a position of the user's hand relative to the at least part of the object;
obtaining interaction data indicating how the user's hand is interacting with the at least part of the object wherein at least some of the interaction data is obtained from an electromyography device coupled to the user; and
using the position data to map the interaction data to the LiDAR data to enable the interaction data to be used to classify the at least part of the object.

According to various, but not necessarily all, examples of the disclosure, there may be provided a computer program comprising instructions which, when executed by an apparatus, cause the apparatus to perform at least:
obtaining LiDAR data from a mediated reality device wherein the mediated reality device is used by a user and the LiDAR data comprises data points representing at least part of an object;
obtaining position data relating to a position of the user's hand relative to the at least part of the object;
obtaining interaction data indicating how the user's hand is interacting with the at least part of the object wherein at least some of the interaction data is obtained from an electromyography device coupled to the user; and
using the position data to map the interaction data to the LiDAR data to enable the interaction data to be used to classify the at least part of the object.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example system
FIG. 2 shows an example method;
FIG. 3 shows an example system;
FIG. 4 shows an example system; and
FIG. 5 shows an example apparatus

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Users of mediated reality devices can also interact with real world objects while they are using the mediated reality device. It can be useful for the objects that the users are interacting with to be classified or identified. This can enable features from the mediated reality applications to be assigned or integrated with features of the object. Examples of the disclosure provide improved methods and apparatus for assigning objects. In examples of the disclosure data relating to interactions of a user with the object are used to improve the classification of the object.

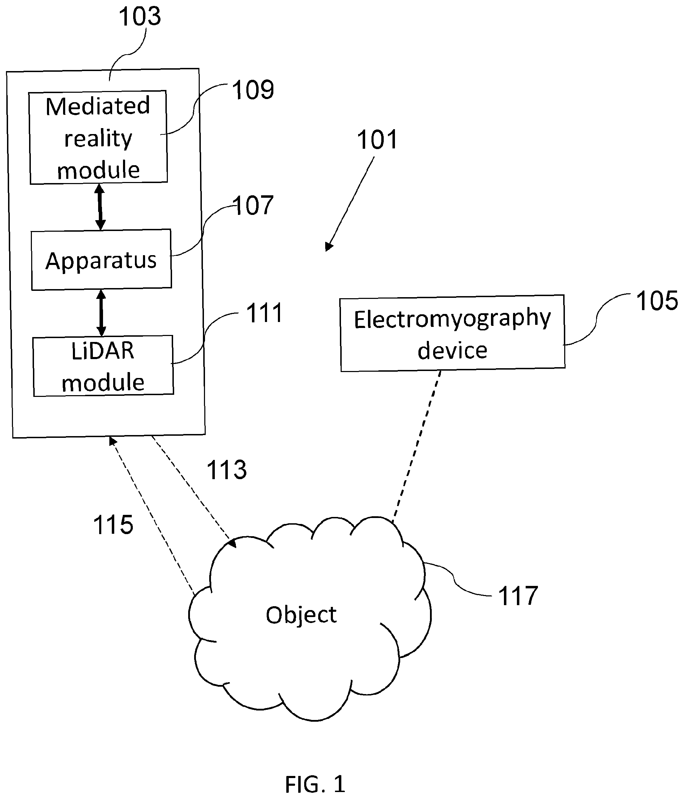

Fig. 1 shows an example system 101. The system 101 comprises a mediated reality device 103 and an electromyography device 105. In the example of Fig. 1 the mediated reality device 103 and the electromyography device 105 are shown as separate devices. In other examples the electromyography device 105, or at least part of the electromyography device 105, could be incorporated within the mediated reality device 103.

In the example of Fig. 1 the mediated reality device 103 comprises an apparatus 107, a mediated reality module 109 and a LiDAR module 111. Only components that are referred to in the following description are shown in Fig.1. Additional components could be provided in the mediated reality device 103 in some examples of the disclosure. For instance, the mediated reality device 103 could comprise one or more transceivers that enable the mediated reality device 103 to communicate with the electromyography device 105 or with any other suitable device.

In some examples the mediated reality device 103 can be a wearable device. For instance, the mediated reality device 103 could be a head set or helmet that is worn on the user's head. This could enable mediated reality images to be displayed to a user.

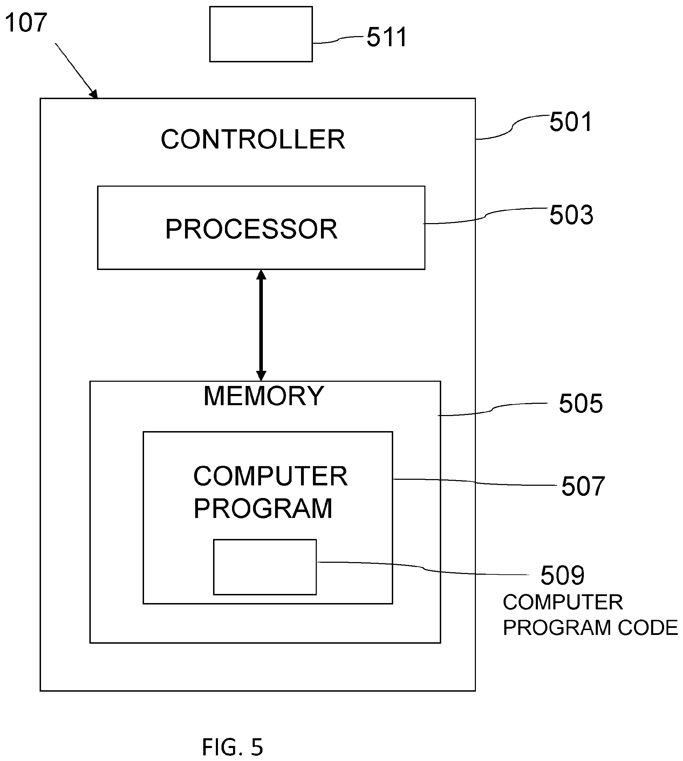

The apparatus 107 can comprise a controller comprising a processor and memory. Examples of an apparatus 107 are shown in Fig. 5. The apparatus 107 can be configured to enable control of the mediated reality device 103. For example, the apparatus 107 can be configured to control content that is provided by the mediated reality module 109 and/or process information obtained by the LiDAR module 111 and/or to control any other suitable functions.

The mediated reality module 109 can comprise any device that enables mediated reality content to be provided to a user of the mediated reality device. The mediated reality content can comprise augmented and/or virtual reality content. The mediated reality content can comprise visual content and/or audio content.

In some examples the mediated reality module 109 can comprise one or more displays. The displays can be configured to display mediated reality content. In some examples the display of the mediated reality content can be controlled so that it is aligned with a user's view of one or more real world objects.

In some examples the mediated reality module 109 could also comprise means for providing audio content. The means for providing audio content could comprise one or more loudspeakers. The loudspeakers can be configured to enable spatial audio to be played back for the user. Other means for providing other types of content could be used in some examples.

The LiDAR module 111 can comprise any means that can be configured to use LiDAR signals to detect one or more objects 117. The LiDAR module 111 can be configured to detect the distance to the object 117 or part of the object 117, to detect the position of the object 117 or part of the object, to detect the type of the object 117or part of the object and/or to detect any other suitable information about the object 117 or part of the object 117.

The LiDAR module 111 can be configured to transmit LiDAR signals 113 to the object 117. The LiDAR signals 113 that are incident on the surface of the object 113 can be reflected by the surface of the object 117 or part of the object 117 to provide reflected LiDAR signals 115. The LiDAR module 111 is configured to detect the reflected LiDAR signals 115 and use the reflected LiDAR signals 115 to detect a distance between the mediated reality device 103 and the object 117.

The LiDAR signals 113 that are transmitted by the LiDAR module 111 can comprise any suitable type of signal. In some examples the LiDAR signals 113 can comprise a signal in the infra-red range. In some examples the LiDAR signals 113 could comprise a dot pattern that is projected onto the object 117. In some examples the LiDAR signals 113 could comprise a beam that is scanned over the surface, or at least part of the surface, of the object 117.

The electromyography device 105 can be configured to obtain interaction data that indicates how the user or the user's hand is interacting with the object 117.

In the example of Fig. 1 the electromyography device 105 is shown as a separate device to the mediated reality device 103. In some examples the electromyography device 105 could be part of the mediated reality device 103 or they could be coupled by any appropriate means. In some examples the electromyography device 105 could comprise additional components that are not shown in Fig. 1. For example, the electromyography device 105 could comprise one or more transceivers that enable the electromyography device 105 to communicate with the mediated reality device 103 or with any other suitable device.

The electromyography device 105 can be configured to detect electrical activity caused by muscle movement of a user. The electrical activity of the muscles can provide an indication of which corresponding part of the user's body are moving and the extent of the forces exerted by the muscles or part of the body. The electrical activity detected by the electromyography device 105 gives an indication of movement of the user or part of the user.

In examples of the disclosure the electromyography device 105 can be coupled to a user of the mediated reality device 103 and can be used to monitor muscular activity of the user. The muscular activity can comprise interaction with the object 117. For example, the muscular activity could be a user gripping or holding a part of an object 117 or it could be the user touching or applying a force to part of an object or it could be any other suitable type of interaction.

The electromyography device 105 can comprise one or more electrodes, or any other suitable means, that can be electrically connected to a user to monitor the electrical activity within the user's muscles.

In the example of Fig. 1 an object 117 is also shown. The object 117 can be a real-world object. The object 117 can be a real object that a user can touch and interact with by making physical contact and/or applying a force. The way in which the user interacts with the object 117 can be determined by the type of object. For instance, if the object 117 is a book a user could hold the book in a particular way, could open and close the book, and could turn pages within the book. If the object is a door the user could apply a force to a part of the door and cause the door to move. Other types of objects 117 and/or other types of interactions could also be used.

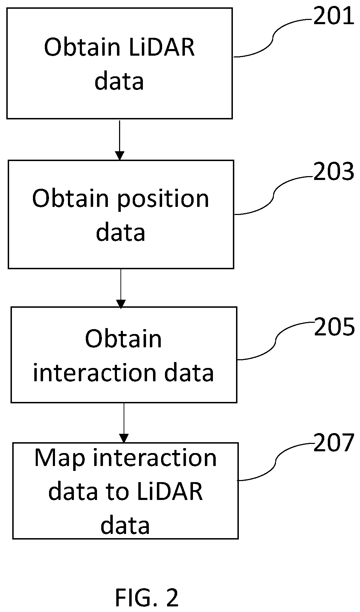

Fig. 2 shows an example method that could be implemented using the system 101 of Fig.1 or any other suitable system. In examples of the disclosure the method could be implemented by the apparatus 107 of the mediated reality device 103. In some examples the method could be performed by a separate or distributed processing device or any other suitable means.

At block 201 the method comprises obtaining LiDAR data from a mediated reality device 103. The LiDAR data could be obtained from a LiDAR module of a mediated reality device 103.

The mediated reality device 103 from which the LiDAR data is obtained can be used by a user. The mediated reality device 103 could be a wearable device that is being worn by a user. For example, the mediated reality device 103 could be a head mounted device that is worn on the user's head. The mediated reality device 103 could comprise a headset or glasses or any other suitable type of device.

In examples of the disclosure the LiDAR module 111 could be positioned on the front of the mediated reality device 103 so that the LiDAR module 111 can be used to scan objects 117 that are positioned in front of the user. The LiDAR module 111 can be configured to scan objects that the user is interacting with.

The LiDAR data comprises data points representing at least part of an object 117. The LiDAR data can be obtained from reflected LiDAR signals 115. The LiDAR data can comprise data relating to the position of the object 117, data relating to the geometry of the object, or data relating to any other relevant characteristic of the object 117.

The LiDAR data can comprise data relating to the shape or geometry of an object 117 but does not need to comprise any information relating to a function of the object 117 or an indication of the how the object 117 might be used. For example, The LiDAR data can detect a rectangle but cannot, on its own, determine if the rectangle is a book or a box.

At block 203 the method comprises obtaining position data relating to a position of the user's hand relative to the at least part of the object 117. The positioning data can be used to determine if the user's hand, or part of the user's hand. is touching an object 117 or not.

The position data can be determined using any suitable means. In some examples the position data can be determined from the LiDAR data that is obtained using the LiDAR module 111. In some examples a different positioning device could be used instead of the LiDAR data or in addition to the LiDAR data. The different positioning device could comprise an inertial measurement unit or any other suitable means. The inertial measurement unit could be a multi-axis measurement unit. For example, it could comprise a nine-axis inertial measurement unit. The nine-axis inertial measurement unit could comprise accelerometer, gyroscope and magnetometer and/or any other suitable means.

At block 205 the method comprises obtaining interaction data. The interaction data can comprise data that indicates how the user's hand is interacting with at least part of the object 117.

The interaction data can comprise data that represents a user's interaction with an object 117 or part of an object 117. The interaction can comprise a user touching the object 117 or a part of the object 117, the user applying a force to the object 117 or a part of the object 117, the user moving the object 117 or a part of the object 117, the user holding the object 117 or a part of the object 117, the user gripping the object 117 or a part of the object 117 or any other suitable interaction.

The manner in which a user interacts with the object 117 or a part of the object 117 can also be part of the interactions. For example, a user could touch an object 117 with the palm of their hand or with just their fingers.

For example, the interaction data can indicate types of forces that are being applied to the object 117, which part of a user's hand are being used to apply the forces, the location of the object to which the forces are being applied and any other suitable information.

The interaction data can be obtained from an electromyography device 105. The electromyography device 105 can be as shown in Fig. 2. In some examples at least part of the interaction data can be obtained from other types of devices. This can enable different types of interaction data to be obtained and/or can increase confidence levels in the data that is obtained. Other types of devices that could be used to obtain the interaction data could comprise at least one of: one or more light sensors, such as one or more light projection-based sensors (similar to LiDAR, these sensors may emit visible or non-visible light that is directed to and reflected back from the at east part of the object 117 and/or a part of the user that interacts with the at least part of the object 117, the received reflected light providing an indication of the user interaction with the at least part of the object 117); or wearable strain gauges coupled to a part of the user or any other suitable means. In some examples the wearable strain gauge could comprise a wired glove or any other suitable means.

At block 207 the position data is used to map the interaction data to the LiDAR data. The position data can be used to determine the position of a user's hand relative to the object 117 when an interaction represented by the interaction data occurs. The LiDAR data corresponding to that position can then be mapped to the interaction data to indicate a type of interaction that can be made with a part of the object 117. This mapping can be used to classify the at least part of the object 117. By establishing one or more interactions that can be made with an object 117, different types of objects 117 can be differentiated from each other. For example, a box and a book could both appear as rectangles in LiDAR data but would have different types of interactions assigned to them. These different types of interactions could be used to classify the types of object 117.

In some examples interaction data and position data could be obtained form a plurality of different parts of the object 117 and these could be used to enable classification of the different parts of the object,
The classification of the objects 117 could be performed by the apparatus 107 of the mediated reality device 103 or by any other suitable device.

In some examples the classification could be a type of the object 117 or the part of the object 117. For instance, it could be an indication if an object 117 is a book or a box or if it fits into any other category.

In some examples the classification could comprise a function of the object 117 or a part of the object 117. In some examples the object 117 could comprise parts that have particular functions or are intended to be interacted with in a particular way and the classification could comprise an indication of these functions. As an example, an object could comprise user inputs such as buttons or knobs or other means that a user could use to control the object 117 or part of the object 117. The classification could comprise identifying these functions. Other types of functions could be used in some examples.

In some examples the classification could comprise a configuration of the object 117 or a part of the object 117. For instance, it could be an indication if a book is open or closed or whether a button or switch has been depressed or not. Other types of configuration could be used in some examples.

In the example of Fig. 1 the electromyography device 105 is a separate device to the mediated reality device 103. The electromyography device 105 can be configured to transmit the interaction data to the mediated reality device 103 to enable the interaction data to be used for classifying the object 117. In some examples a different device could perform the classification. For instance, a separate processing device, or a distributed processor could be used. In such cases the electromyography device 105 and the mediated reality device 103 can be configured to provide the appropriate data to the processing device.

Once the object 117 or the part of the object 117 has been classified then the classification can be used for any suitable purpose. In some examples the classification can be used to control rendering of one or more mediated reality functions by the mediated reality device 103. The control of the rendering can determine what information is provided by the mediated reality device 103 and how this information is provided.

In some examples the control of the rendering of the mediated reality functions can comprise controlling a respective position of one or more displayed mediated reality images relative to the position of the object 117 or a part of the object 117. For instance, the mediated reality module 109 can be controlled so that mediated reality functions are displayed overlaying, or adjacent to, parts of the object 117 that are associated with those functions. The mediated reality images could comprise three-dimensional images, holographic images or any other suitable types of images.

In some examples it might be desirable that the mediated reality functions are displayed so that they do not overlay the object 117. For instance, if the classification indicates that a part of the object 117 is likely to be used for interactions then it is helpful for a user to be able to see this part of the object 117. In such cases the mediated reality module 109 controls the display of the mediated reality content so that it does not obstruct this part of the object 117.

In some examples the control of the rendering of the mediated reality functions can comprise controlling scaling of one or more mediated reality images relative to the position of the at least part of the object 117. The scaling of the mediated reality images can be controlled so that appropriate parts of the images are displayed close to, or overlaying appropriate parts of the object 117.

In some examples the control of the rendering of the mediated reality functions can comprise displaying one or more mediated reality images relating to the user's interaction with the object 117 or the part of the object 117. For instance, if the object 117 comprises a switch the mediated reality content could indicate whether the user has turned the switch on or off.

In some examples the control of the rendering of the mediated reality functions can comprise providing a user input region at a location relative to the object 117 or a part of the object 117. The region could be a defined area or volume in which a user could make gesture inputs. The gesture inputs could then be used to control the mediated reality device 103 or any other suitable device. Similarly in some examples the control of the rendering of the mediated reality functions can comprise preventing user inputs at a location relative to at the object 117 or a part of the object 117. For instance, if a part of the object 117 is likely to be used for interactions then it could be confusing or inconvenient to have an input region close to this part of the object 117. To avoid this the user input regions could be positioned so that they are not close to the parts of the object 117 that a user is likely to use for interactions.

Any suitable means or processes can be used for the scaling or the positioning of the mediated reality images. In some examples the scaling or the positioning can be performed using a latent space transformation of the object 117 that transforms a representation of the object from a first object to a target object.

The mediated reality images or other information that is provided by the mediated reality device 103 can comprise information relating to the classification of the object 117 or the part of the object 117. For instance, the information could comprise a label or an indication of a function associated with the object 117 or the part of the object 117.

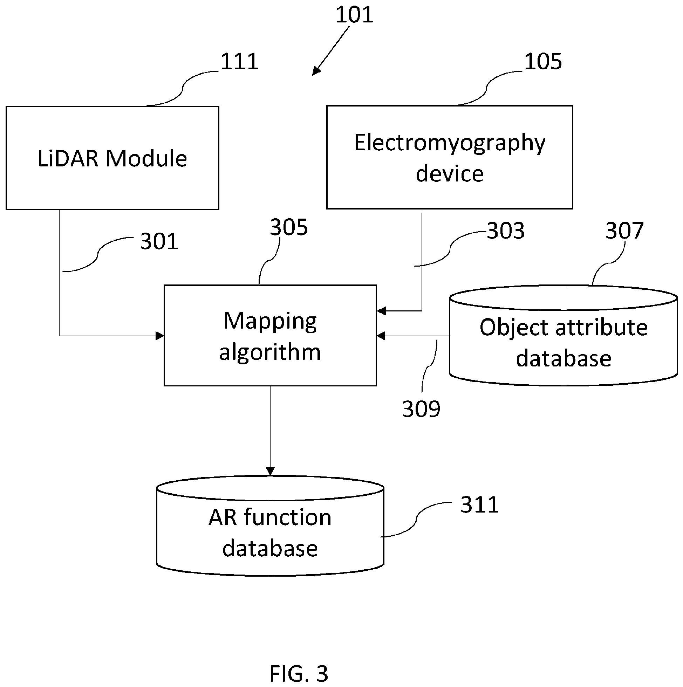

Fig. 3 schematically shows another example system 101 that can be used to implement examples of the disclosure. This system 101 can be used to enable the creation of a database that can then be used for classification of the objects 117. In this example the system comprises a LiDAR module 111 and an electromyography device 105. The LiDAR module 111 could be part of a mediated reality device 103. The electromyography device 105 could also be part of the mediated reality device 103 or could be part of a different device.

The LiDAR module 111 can be configured to collect LiDAR data 301. The LiDAR data 301 comprises data points representing at least part of an object 117. The LiDAR data 301 can be obtained from reflected LiDAR signals 115 as shown in Fig. 1. The LiDAR signals 115 can be reflected from an object 117 so that the LiDAR data 301 comprises information relating to the object 117.

In the example of Fig. 3 the LiDAR data 303 can comprise information indicating a position of an object 117 or a part of the object 117. In some examples the positioning data could be obtained from a different positioning device or additional positioning information could be obtained from an additional positioning device.

The system 101 is configured so that the LiDAR data 301 is provided to a mapping algorithm 305. The mapping algorithm 305 can be implemented using the apparatus 107 of the mediated reality device 103 or using any other suitable processing means.

The electromyography device 105 can be configured to collect interaction data 303. The interaction data 303 can comprise data that indicates how a user's hand, or other suitable part of their body, is interacting with the object 117. The interaction data 303 can be based on, or determined from, electrical activity in the muscles of the user.

In some examples additional interaction data 303 can also be obtained from one or more other devices that are configured to determined movement or positions of the user's hand. For example, the additional interaction data 303 could be obtained from wearable sensors such as strain gauges or any other suitable means.

The system 101 is configured so that the interaction data 303 is provided to the mapping algorithm 305.

In the example of Fig. 3 the system 101 also comprises an object attribute database 307. The object attribute database 307 can be stored locally or could be stored in the cloud or in any other suitable location. The object attribute database 307 could be specific to a particular user or mediated reality device 103 or could be a generic database that comprises data collected from many users and/or devices.

The object attribute database can store possible attributes for the object 117. The attributes could be functions that an object or part of an object can perform, ways in which an object 117 or part of an object can be moved, ways in which a user can interact with part of the object 117 or any other suitable information.

The system 101 is configured so that the object attributes 309 can be retrieved from the object attribute database 307 and provided to the mapping algorithm 305.

The mapping algorithm 305 is configured to map the interaction data 303 to the LiDAR data 301 so as to enable the interaction data 303 to be used to classify at least part of the object. For example, a selection of the LiDAR data points can be associated with a particular interaction. The position data can be used to determine the LiDAR data points that correspond to the part of the object 117 with which the user is interacting. The pairing of the LiDAR data and the interaction data 303 can be compared to object attributes 309 form the object attribute database 307 and used to classify the object 117 or part of the object 117.

Once the object 117 has been classified, or the type of interaction has been determined an AR, or mediated reality, function can be assigned to the object 117 or part of the object 117. The AR or mediated reality function could comprise the display of information, the scaling of information, the positioning of a user input region or any other suitable AR or mediated reality function.

Once the AR, or mediated reality function has been assigned to the object 117 or part of the object 117 the association between the function and the object 117 or part of the object 117 can be stored in an AR function database 311.

The AR function database 311 can be stored locally or could be stored in the cloud or in any other suitable location. The AR function database 311 could be specific to a particular user or mediated reality device 103 or could be a generic database that comprises data collected from many users and/or devices.

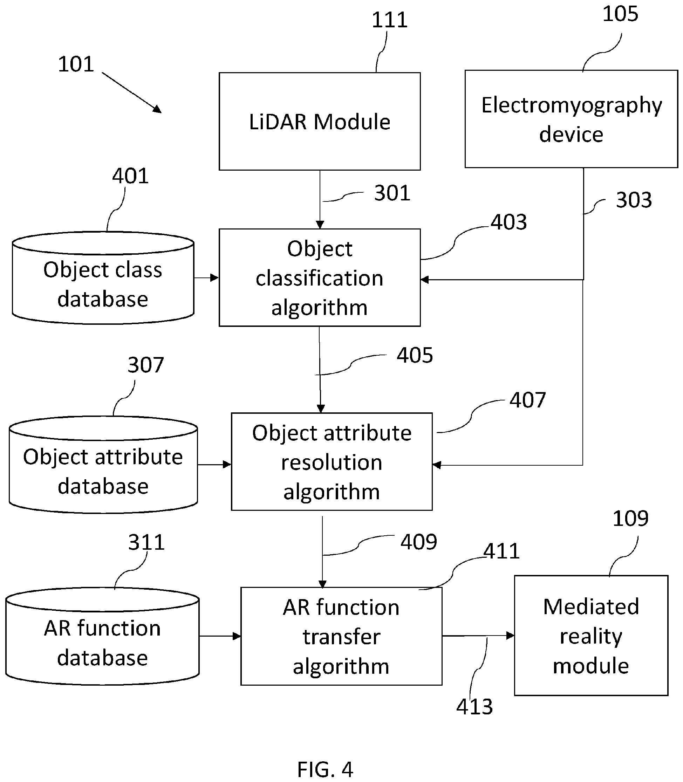

The data stored in the AR function database 311 can be used to implement AR or mediated reality functions when it is detected that the user of the user device 103 is interacting with objects 117 in a specific way. Fig. 4 shows an example of an AR function database 311 being used.

As an illustrative example, the system 101 of Fig. 3 could be used to classify an object 117 such as a book and assign appropriate AR functions to the book based on the classification. This is an illustrative example, other types of object 117 could be used in other examples.

To begin, the user of the mediated reality device 103 can initiate a registration mode of operation for the system. For example, the user could make a user input indicating that they wish to register object attributes and associated function for an AR function database 311.

Once the registration mode has been activated the LIDAR module 111 generates LiDAR data 301 for the objects 117 that are within the field of view of the LiDAR module 111. The LiDAR data 301 can comprise a point cloud or any other suitable type of data.

In some cases the LiDAR data 301 can comprise data relating to more than one object 117. In such cases the system 101 can be configured to enable a user to select which object 117 they wish to classify and assign a function to. For example, the mediated reality device 103 could be configured to enable a user to make a user input to select one or more of the objects117.

Once an object 117 has been selected the user can perform one or more interactions with the object 117. The electromyography device 105 and/or any other suitable sensors can be used to collect interaction data 303 while the interaction is performed.

The interaction that is made can be holding the book in a suitable manner. For example, holding it by the spine of the book, or any other suitable interaction. The interactions that are performed will be dependent upon the type of object 117 that is being used.

The interaction data 303 can be used to classify the object 117 as a book. The potential object attributes 309 corresponding to the identified class of objects can be retrieved from the object attribute database 307.

Once the object attributes have been retrieved the mediated reality device 103 can be configured to prompt a user to interact with different parts of the object 117 corresponding to different attributes. For example, a book will have pages with edges that have the attributes of being able to be turned. A user could be prompted to touch the corners or edges of the pages and turn them. A user could perform different interactions with different parts of the object 117 corresponding to different attributes.

The interaction with the different attributes of the object can confirm the existence of the respective attributes. This can confirm that the object 117 has been correctly classified.

Once the existence of the respective attributes has been confirmed the mediated reality or AR functions can be assigned. In this case the functions are AR functions relating to the book. For example, they could comprise a page tracker at a top edge of the book, page counts on inside faces of the book, pull down glossaries or any other suitable functions. The AR functions that are used can be specific to the type of object 117 that has been classified. In some examples the AR functions that are used can be specific to a user so that different users can select different functions to be used.

In some examples the system 101 can be configured to enable a user to adapt or modify one or more of the AR functions. This can enable a user's personal preferences to be accounted for. For example, a user could select a position for one or more functions or could control boundaries or sizes of one or more functions. As an example, a user of a book could specify that the glossary spans the entire bottom edge of a page.

Once the AR functions have been selected and/or modified by the user the AR functions are mapped to the LiDAR data points that correspond to the respective parts or attributes of the object 117. The AR functions that are mapped can comprise one or more user interface elements or any other suitable functions.

In some examples the point cloud from the LiDAR data 301 can be transformed into a latent space for the identified class of object. The transform that is used can then be applied to the corresponding AR functions so that the AR functions can also be encoded into the latent space.

Fig. 4 schematically shows another example system 101 that can be used to implement examples of the disclosure. This system 101 can be used to enable AR functions or mediated reality functions to be used on new objects 117. The objects can be of the same class as objects that have been analysed using the registration process described in relation to Fig. 3. The objects 117 could be in the same class but could have different sizes and/or shapes.

In this example the system comprises a LiDAR module 111 and an electromyography device 105. The LiDAR module 111 could be part of a mediated reality device 103. The electromyography device 105 could also be part of the mediated reality device 103 or could be part of a different device.

The LiDAR module is configured to collect LiDAR data 301 and the electromyography device 105 is configured to detect interaction data 303. Additional data could also be collected in some examples. For instance, positioning data could be obtained and/or interaction data 303 could be obtained form other devices as well as the electromyography device 105.

The system 101 also comprises an object class database 401. The object class database 401 stores information relating to types of objects and their associated LiDAR data 301 and interaction data 303.

The system 101 is configured so that the LiDAR data 301 and the interaction data 303 is provided to an object classification algorithm 403. The object classification algorithm 403 could be a machine learning algorithm or any other suitable type of algorithm or means. In some examples the object classification algorithm 403 could comprise a support-vector machine or any other suitable means.

The machine learning algorithm can comprise a machine learning model. The machine learning model that is used can comprise a neural network or any other suitable type of trainable model. The term "Machine Learning" refers to any kind of artificial intelligence (AI), or other method that is trainable or tuneable using data. The machine learning model can comprise a computer program. The machine learning model can be trained to perform a task, such as classifying an object, or part of an object, using the LiDAR data and the interaction data 303, or any other suitable task, without being explicitly programmed to perform that task. The machine learning model can be configured to learn from experience E with respect to some class of tasks T and performance measure P if its performance at tasks in T, as measured by P, improves with experience E. In these examples the machine learning model can learn from previously obtained LiDAR data, position data and interaction data 303, or any other suitable data. The machine learning model can also be a trainable computer program. Other types of machine learning models could be used in other examples.

Any suitable process can be used to train the machine learning model. The training of the machine learning model can be performed using real world/or simulation data. The training data used to train the machine learning model can comprise historical data collected from LiDAR modules 111 and electromyography devices 105 or any other suitable source. The training of the machine learning model can be repeated as appropriate until the machine learning model has attained a sufficient level of stability. The machine learning model has a sufficient level of stability when fluctuations in the predictions provided by the machine learning model are low enough to enable the machine learning model to be used to perform the relevant tasks. The machine learning model has a sufficient level of stability when fluctuations in the outputs provided by the machine learning model are low enough so that the machine learning model provides consistent responses to test inputs.

The object classification algorithm 403 can be configured to use the data in the object class database 401 to classify the detected object 117 based on the LiDAR data 301 and the interaction data 303. The object classification algorithm 403 can provide an object classification 405 as an output.

Once the detected object 117 has been classified the system 101 is configured to enable corresponding AR or mediated reality functions to be implemented. In the example of Fig. 4 the object classification 405 and the interaction data 303 are provided as inputs to an object attribute resolution algorithm 407. The object attribute resolution algorithm 407 can also receive object attributes as an input from the object attributes database 307. The object attributes can comprise information relating to attributes corresponding to the determined class of object 117.

The object attribute resolution algorithm 407 can be configured to resolve the respective attributes of the object 117. For example, the object attribute resolution algorithm 407 can be configured to determine the locations or positions of respective attributes or to identify the LiDAR data points that correspond to the respective attributes. The respective attributes that are to be expected for the object can be determined form the data in the object attribute database 307.

The object attribute resolution algorithm 407 can comprise any suitable algorithm or means. In some examples the object attribute resolution algorithm 407 could comprise a machine learning algorithm or other rules based algorithm.

The machine learning algorithm that is used for the object attribute resolution algorithm 407 can comprise a machine learning model. The machine learning model that is used can comprise a neural network or any other suitable type of trainable model. The term "Machine Learning" refers to any kind of artificial intelligence (AI), or other method that is trainable or tuneable using data. The machine learning model can comprise a computer program. The machine learning model can be trained to perform a task, such as resolving attributes of an object, using the object classification 405 and the interaction data 303, without being explicitly programmed to perform that task. The machine learning model can be configured to learn from experience E with respect to some class of tasks T and performance measure P if its performance at tasks in T, as measured by P, improves with experience E. In these examples the machine learning model can learn from previously obtained object classifications 405 and interaction data 303, or any other suitable data. The machine learning model can also be a trainable computer program. Other types of machine learning models could be used in other examples.

Any suitable process can be used to train the machine learning model. The training of the machine learning model can be performed using real world/or simulation data. The training data used to train the machine learning model can comprise historical data collected from object classification algorithms 403, and electromyography devices 105 or any other suitable source. The training of the machine learning model can be repeated as appropriate until the machine learning model has attained a sufficient level of stability. The machine learning model has a sufficient level of stability when fluctuations in the predictions provided by the machine learning model are low enough to enable the machine learning model to be used to perform the relevant tasks. The machine learning model has a sufficient level of stability when fluctuations in the outputs provided by the machine learning model are low enough so that the machine learning model provides consistent responses to test inputs.

The object attribute resolution algorithm 407 can provide resolved attributes 409 as an output.

The resolved attributes 409 can be provided as an input to the AR function transfer algorithm 411. The AR function transfer algorithm 411 can also receive information relating to AR functions as an input from the AR function database 307. The information relating to AR functions can comprise information relating to the AR functions that are to be used, the positions at which the AR functions are to implemented relative the object 117 or the user's view of the object 117, any user specific modifications to the AR functions and/or any other suitable information.

The AR function transfer algorithm 411 is configured to use the resolved attributes 409 and the information relating to the AR functions to map the respective elements of the AR functions to the corresponding attributes. The AR function transfer algorithm 411 provides an AR Function 413 as an output.

The AR function transfer algorithm 411 can comprise any suitable algorithm or means. In some examples the AR function transfer algorithm 411 could comprise a machine learning algorithm or other rules based algorithm.

The machine learning algorithm that is used for the AR function transfer algorithm 411 can comprise a machine learning model. The machine learning model that is used can comprise a neural network or any other suitable type of trainable model. The term "Machine Learning" refers to any kind of artificial intelligence (AI), or other method that is trainable or tuneable using data. The machine learning model can comprise a computer program. The machine learning model can be trained to perform a task, such as transferring AR functions using data from the AR function database 311 and the resolved attributes 409, without being explicitly programmed to perform that task. The machine learning model can be configured to learn from experience E with respect to some class of tasks T and performance measure P if its performance at tasks in T, as measured by P, improves with experience E. In these examples the machine learning model can learn from previously obtained AR functions or resolved attributes 409, or any other suitable data. The machine learning model can also be a trainable computer program. Other types of machine learning models could be used in other examples.

Any suitable process can be used to train the machine learning model. The training of the machine learning model can be performed using real world/or simulation data. The training data used to train the machine learning model can comprise historical data collected from an AR function database 311 or an object attribute resolution algorithm 407 or any other suitable source. The training of the machine learning model can be repeated as appropriate until the machine learning model has attained a sufficient level of stability. The machine learning model has a sufficient level of stability when fluctuations in the predictions provided by the machine learning model are low enough to enable the machine learning model to be used to perform the relevant tasks. The machine learning model has a sufficient level of stability when fluctuations in the outputs provided by the machine learning model are low enough so that the machine learning model provides consistent responses to test inputs.

The AR Function 413 is provided as an input to a mediated reality module 109. The mediated reality module can then render the appropriate components of the AR functions. For example, user interface elements can be displayed in appropriate locations.

As an illustrative example, the system 101 of Fig. 4 could be used to transfer AR functions from a previously classified object 117 to a new object in the same classification. In this example the object 117 is a book. This is an illustrative example, other types of object 117 could be used in other examples.

The LiDAR module 111 generates LiDAR data 301 for the objects 117 that are within the field of view of the LiDAR module 111. The LiDAR data 301 can comprise a point cloud or any other suitable type of data.

In some use case scenarios, the LiDAR data 301 on its own might be sufficient to enable classification of an object 117. In other use cases the LiDAR data 301 might not be sufficient to classify the object with a high enough level of confidence. In such cases the system of Fig. 4 that makes use of the interaction data 303 would be implemented.

The interaction data 303 can be collected from the electromyography device 105 and any other suitable source. This interaction data 303 can then be used in addition to the LiDAR data 301 to enable classification of the object 117. In this case the object 117 would be classified as a book.

In some examples the interaction data 303 could also be used to identify specific parts or attributes of the objects 117. In this use case a user 117 could hold the spine of the book to enable the spine of the book to be identified, and/or could touch edges of pages or turn one or more pages. This can enable the parts or attributes of the object 117 to be labelled.

In some examples the user could interact with a subset of the available parts of attributes of the object 117 and based on these interactions the relevant parts or attributes could be identified. In such cases one or more attributes or parts of the object 117 that are not in the subset of parts or attributes that the user has interacted with could be determined based on the parts or attributes that have been identified. For example, a user could interact with a top edge of a page to enable the top edge of the page to be identified. Based on the identification of the top edge of the page the bottom edge of the page could also be identified without the user having to directly interact with the bottom edge of the page.

Once the respective attributes of the object 117 have been identified the resolved attributes are used by the AR function transfer algorithm 411 to transfer the elements of the AR functions that have been mapped to the respective attributes in the latent space onto the corresponding attributes of the target object 117.

The mediated reality module 109 is used to display the respective elements of the AR functions. The transfer algorithm ensures that the elements of the AR function are correctly scaled and positioned relative to the target object 117 so that when the user uses the book the AR functions are correctly displayed. For example, the page numbers and glossary are located in appropriate locations relative to the book.

Fig. 5 schematically illustrates an apparatus 107 that can be used to implement examples of the disclosure. In this example the apparatus 107 comprises a controller 501. The controller 501 can be a chip or a chip-set. In some examples the controller 501 can be provided within a communications device or any other suitable type of device.

In the example of Fig. 5 the implementation of the controller 501 can be as controller circuitry. In some examples the controller 501 can be implemented in hardware alone, have certain aspects in software including firmware alone or can be a combination of hardware and software (including firmware).

As illustrated in Fig. 5 the controller 501 can be implemented using instructions that enable hardware functionality, for example, by using executable instructions of a computer program 507 in a general-purpose or special-purpose processor 503 that may be stored on a computer readable storage medium (disk, memory etc.) to be executed by such a processor 503.

The processor 503 is configured to read from and write to the memory 505. The processor 503 can also comprise an output interface via which data and/or commands are output by the processor 503 and an input interface via which data and/or commands are input to the processor 503.

The memory 505 stores a computer program 507 comprising computer program instructions (computer program code) that controls the operation of the controller 501 when loaded into the processor 503. The computer program instructions, of the computer program 507, provide the logic and routines that enables the controller 501. to perform the methods illustrated in the accompanying Figs. The processor 503 by reading the memory 505 is able to load and execute the computer program 507.

The apparatus 107 comprises:
at least one processor 503; and
at least one memory 505 storing instructions that, when executed by the at least one processor, cause the apparatus at least to perform:
   obtaining 201 LiDAR data from a mediated reality device wherein the mediated reality device is used by a user and the LiDAR data comprises data points representing at least part of an object;
   obtaining 203 position data relating to a position of the user's hand relative to the at least part of the object;
   obtaining 205 interaction data indicating how the user's hand is interacting with the at least part of the object wherein at least some of the interaction data is obtained from an electromyography device coupled to the user; and
   using the position data to map 207 the interaction data to the LiDAR data to enable the interaction data to be used to classify the at least part of the object.

As illustrated in Fig. 5, the computer program 507 can arrive at the controller 501 via any suitable delivery mechanism 511. The delivery mechanism 511 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 507. The delivery mechanism can be a signal configured to reliably transfer the computer program 507. The controller 501 can propagate or transmit the computer program 507 as a computer data signal. In some examples the computer program 507 can be transmitted to the controller 501 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 507 comprises computer program instructions for causing an apparatus 107 to perform at least the following or for performing at least the following:
obtaining 201 LiDAR data from a mediated reality device wherein the mediated reality device is used by a user and the LiDAR data comprises data points representing at least part of an object;
obtaining 203 position data relating to a position of the user's hand relative to the at least part of the object;
obtaining 205 interaction data indicating how the user's hand is interacting with the at least part of the object wherein at least some of the interaction data is obtained from an electromyography device coupled to the user; and
using the position data to map 207 the interaction data to the LiDAR data to enable the interaction data to be used to classify the at least part of the object.

The computer program instructions can be comprised in a computer program 507, a non-transitory computer readable medium, a computer program product, a machine readable medium. In some but not necessarily all examples, the computer program instructions can be distributed over more than one computer program 507.

Although the memory 505 is illustrated as a single component/circuitry it can be implemented as one or more separate components/circuitry some or all of which can be integrated/removable and/or can provide permanent/semi-permanent/ dynamic/cached storage.

Although the processor 503 is illustrated as a single component/circuitry it can be implemented as one or more separate components/circuitry some or all of which can be integrated/removable. The processor 503 can be a single core or multi-core processor.

References to 'computer-readable storage medium', 'computer program product, 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Fig. 2 can represent steps in a method and/or sections of code in the computer program 507. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

## Claims

1. An apparatus (107) comprising means for:
obtaining (201) LiDAR data (301) from a mediated reality device (103) wherein the mediated reality device (103) is used by a user and the LiDAR data (301) comprises data points representing at least part of an object (117);
obtaining (203) position data relating to a position of the user's hand relative to the at least part of the object (117);
obtaining (205) interaction data (303) indicating how the user's hand is interacting with the at least part of the object (117) wherein at least some of the interaction data (303) is obtained from an electromyography device (105) coupled to the user; and
using the position data to map (207) the interaction data (303) to the LiDAR data (301) to enable the interaction data (303) to be used to classify the at least part of the object (117).

2. An apparatus as claimed in claim 1 wherein the classification of the at least part of the object comprises at least one of; a type of the at least part of the object, a function of the at least part of the object, or a configuration of the at least part of the object.

3. An apparatus as claimed in any preceding claim wherein the classification of the at least part of the object is used to control rendering of one or more mediated reality functions by the mediated reality device.

4. An apparatus as claimed in claim 3 wherein the control of the rendering of the mediated reality functions comprises at least one of: controlling a respective position of one or more displayed mediated reality images relative to the position of the at least part of the object, controlling scaling of one or more mediated reality images relative to the position of the at least part of the object, displaying one or more mediated reality images relating to the user's interaction with the at least part of the object, providing a user input region at a location relative to the at least part of the object; preventing user inputs at a location relative to at the at least part of the object.

5. An apparatus as claimed in claim 4 wherein at least one of the scaling or the positioning of the one or more mediated reality images is performed using a latent space transformation of the object that transforms a representation of the object from a first object to a target object.

6. An apparatus as claimed in any of claims 4 to 5 wherein the mediated reality images comprise information relating to the classification of the at least part of the object.

7. An apparatus as claimed in any preceding claim wherein the position data is obtained from at least one of an inertial measurement unit, or LiDAR data.

8. An apparatus as claimed in any preceding claim wherein the interaction data is also obtained from at least one or more of: wearable strain gauges coupled to a part of the user, light sensors.

9. An apparatus as claimed in any preceding claim wherein the interaction with the at least part of the object comprises at least one of: the user touching the at least part of the object, the user applying a force to the at least part of the object, the user moving the at least part of the object, the user holding the at least part of the object, the user gripping the at least part of the object.

10. An apparatus as claimed in any preceding claim wherein the means are for obtaining interaction data for a plurality of parts of the object and using corresponding position data to enable classification of the plurality of parts of the object.

11. A device comprising an apparatus as claimed in any preceding claim.

12. A device as claimed in claim 11 wherein the device comprises at least one of; a mediated reality device, a user electronic device.

13. A method comprising:
obtaining (201) LiDAR data (301) from a mediated reality device wherein the mediated reality device (103) is used by a user and the LiDAR data (301) comprises data points representing at least part of an object (117);
obtaining (203) position data relating to a position of the user's hand relative to the at least part of the object (117);
obtaining (205) interaction data (303) indicating how the user's hand is interacting with the at least part of the object (117) wherein at least some of the interaction data (303) is obtained from an electromyography device (105) coupled to the user; and
using the position data to map (207) the interaction data (303) to the LiDAR data (301) to enable the interaction data (303) to be used to classify the at least part of the object (117).

14. A method as claimed in claim 13 wherein the classification of the at least part of the object comprises at least one of; a type of the at least part of the object, a function of the at least part of the object, or a configuration of the at least part of the object.

15. A computer program (507) comprising instructions which, when executed by an apparatus (107), cause the apparatus (107) to perform at least:
obtaining (201) LiDAR data (301) from a mediated reality device wherein the mediated reality device (103) is used by a user and the LiDAR data (301) comprises data points representing at least part of an object (117);
obtaining (203) position data relating to a position of the user's hand relative to the at least part of the object (117);
obtaining (205) interaction data (303) indicating how the user's hand is interacting with the at least part of the object (117) wherein at least some of the interaction data (303) is obtained from an electromyography device (105) coupled to the user; and
using the position data to map (207) the interaction data (303) to the LiDAR data (301) to enable the interaction data (303) to be used to classify the at least part of the object (117).

## Patentansprüche

1. Einrichtung (107), die Mittel für Folgendes umfasst:
Erhalten (201) von LiDAR-Daten (301) von einer Vorrichtung (103) der vermittelten Realität, wobei die Vorrichtung (103) der vermittelten Realität von einem Benutzer verwendet wird und die LiDAR-Daten (301) Datenpunkte umfassen, die mindestens einen Teil eines Objekts (117) repräsentieren;
Erhalten (203) von Positionsdaten, die sich auf eine Position einer Hand des Benutzers relativ zu dem mindestens einen Teil des Objekts (117) beziehen;
Erhalten (205) von Interaktionsdaten (303), die anzeigen, wie die Hand des Benutzers mit dem mindestens einen Teil des Objekts (117) interagiert, wobei mindestens einige der Interaktionsdaten (303) von einer Elektromyografievorrichtung (105) erhalten wird, die an den Benutzer gekoppelt ist; und
Verwenden der Positionsdaten, um die Interaktionsdaten (303) den LiDAR-Daten (301) zuzuordnen (207), um es zu ermöglichen, dass die Interaktionsdaten (303) verwendet werden, um mindestens den Teil des Objekts (117) zu klassifizieren.

2. Einrichtung nach Anspruch 1, wobei die Klassifizierung des mindestens einen Teils des Objekts mindestens eines von Folgendem umfasst: einer Art des mindestens einen Teils des Objekts, einer Funktion des mindestens einen Teils des Objekts oder einer Auslegung des mindestens einen Teils des Objekts.

3. Einrichtung nach einem der vorhergehenden Ansprüche, wobei die Klassifizierung des mindestens einen Teils des Objekts verwendet wird, um das Rendern von einer oder mehreren Funktionen der vermittelten Realität durch die Vorrichtung der vermittelten Realität zu steuern.

4. Einrichtung nach Anspruch 3, wobei das Steuern des Renderns der Funktionen der vermittelten Realität mindestens eines von Folgendem umfasst: Steuern einer jeweiligen Position von einem oder mehreren angezeigten Bildern der vermittelten Realität relativ zur Position des mindestens einen Teils des Objekts, Steuern des Skalierens von einem oder mehreren Bildern der vermittelten Realität relativ zur Position des mindestens einen Teils des Objekts, Anzeigen von einem oder mehreren Bildern der vermittelten Realität, die sich auf die Interaktion des Benutzers mit dem mindestens einen Teil des Objekts beziehen, Bereitstellen eines Benutzereingabebereichs an einer Stelle relativ zu dem mindestens einen Teil des Objekts; Verhindern von Benutzereingaben an einer Stelle relativ zu dem mindestens einen Teil des Objekts.

5. Einrichtung nach Anspruch 4, wobei mindestens eines des Skalierens oder des Positionierens des einen oder der mehreren Bilder der vermittelten Realität unter Verwendung einer latenten Raumumwandlung des Objekts durchgeführt wird, die eine Repräsentation des Objekts von einem ersten Objekt zu einem Zielobjekt umwandelt.

6. Einrichtung nach einem der Ansprüche 4 bis 5, wobei die Bilder der vermittelten Realität Informationen umfassen, die sich auf die Klassifizierung des mindestens einen Teils des Objekts beziehen.

7. Einrichtung nach einem der vorhergehenden Ansprüche, wobei die Positionsdaten von mindestens einem einer Trägheitsmesseinheit oder von LiDAR-Daten erhalten werden.

8. Einrichtung nach einem der vorhergehenden Ansprüche, wobei die Interaktionsdaten auch von mindestens einem von Folgendem erhalten werden: tragbaren Dehnungsmessern, die an einen Teil des Benutzers gekoppelt sind, Lichtsensoren.

9. Einrichtung nach einem der vorhergehenden Ansprüche, wobei die Interaktion mit dem mindestens einen Teil des Objekts mindestens eines von Folgendem umfasst: Berühren des mindestens einen Teils des Objekts durch den Benutzer, Ausüben einer Kraft auf den mindestens einen Teil des Objekts durch den Benutzer, Bewegen des mindestens einen Teils des Objekts durch den Benutzer, Halten des mindestens einen Teils des Objekts durch den Benutzer, Greifen des mindestens einen Teils des Objekts durch den Benutzer.

10. Einrichtung nach einem der vorhergehenden Ansprüche, wobei die Mittel dem Erhalten von Interaktionsdaten für eine Vielzahl von Teilen des Objekts und dem Verwenden von entsprechenden Positionsdaten, um eine Klassifizierung der Vielzahl von Teilen des Objekts zu ermöglichen, dienen.

11. Vorrichtung, die eine Einrichtung nach einem der vorhergehenden Ansprüche umfasst.

12. Vorrichtung nach Anspruch 11, wobei die Vorrichtung mindestens eines von Folgendem umfasst: einer Vorrichtung der vermittelten Realität, einer elektronischen Benutzervorrichtung.

13. Verfahren, das Folgendes umfasst:
Erhalten (201) von LiDAR-Daten (301) der vermittelten Realität, wobei die Vorrichtung (103) der vermittelten Realität von einem Benutzer verwendet wird und die LiDAR-Daten (301) Datenpunkte umfassen, die mindestens einen Teil eines Objekts (117) repräsentieren;
Erhalten (203) von Positionsdaten, die sich auf eine Position einer Hand des Benutzers relativ zu dem mindestens einen Teil des Objekts (117) beziehen;
Erhalten (205) von Interaktionsdaten (303), die anzeigen, wie die Hand des Benutzers mit dem mindestens einen Teil des Objekts (117) interagiert, wobei mindestens einige der Interaktionsdaten (303) von einer Elektromyografievorrichtung (105) erhalten wird, die an den Benutzer gekoppelt ist; und
Verwenden der Positionsdaten, um die Interaktionsdaten (303) den LiDAR-Daten (301) zuzuordnen (207), um es zu ermöglichen, dass die Interaktionsdaten (303) verwendet werden, um mindestens den Teil des Objekts (117) zu klassifizieren.

14. Verfahren nach Anspruch 13, wobei die Klassifizierung des mindestens einen Teils des Objekts mindestens eines von Folgendem umfasst: einer Art des mindestens einen Teils des Objekts, einer Funktion des mindestens einen Teils des Objekts oder einer Auslegung des mindestens einen Teils des Objekts.

15. Computerprogramm (507), das Anweisungen umfasst, die, wenn sie von einer Einrichtung (107) ausgeführt werden, die Einrichtung (107) veranlassen, mindestens Folgendes durchzuführen:
Erhalten (201) von LiDAR-Daten (301) der vermittelten Realität, wobei die Vorrichtung (103) der vermittelten Realität von einem Benutzer verwendet wird und die LiDAR-Daten (301) Datenpunkte umfassen, die mindestens einen Teil eines Objekts (117) repräsentieren;
Erhalten (203) von Positionsdaten, die sich auf eine Position einer Hand des Benutzers relativ zu dem mindestens einen Teil des Objekts (117) beziehen;
Erhalten (205) von Interaktionsdaten (303), die anzeigen, wie die Hand des Benutzers mit dem mindestens einen Teil des Objekts (117) interagiert, wobei mindestens einige der Interaktionsdaten (303) von einer Elektromyografievorrichtung (105) erhalten wird, die an den Benutzer gekoppelt ist; und
Verwenden der Positionsdaten, um die Interaktionsdaten (303) den LiDAR-Daten (301) zuzuordnen (207), um es zu ermöglichen, dass die Interaktionsdaten (303) verwendet werden, um mindestens den Teil des Objekts (117) zu klassifizieren.

## Revendications

1. Appareil (107) comprenant un moyen destiné à :
obtenir (201) des données LiDAR (301) auprès d'un dispositif de réalité retransmise (103), dans lequel le dispositif de réalité retransmise (103) est utilisé par un utilisateur et les données LiDAR (301) comprennent des points de données qui représentent au moins une partie d'un objet (117) ;
obtenir (203) des données de position relatives à une position de la main de l'utilisateur par rapport à l'au moins une partie de l'objet (117) ;
obtenir (205) des données d'interaction (303) qui indiquent la manière dont la main de l'utilisateur interagit avec l'au moins une partie de l'objet (117), dans lequel au moins certaines des données d'interaction (303) sont obtenues auprès d'un dispositif d'électromyographie (105) couplé à l'utilisateur ; et
utiliser les données de position pour cartographier (207) les données d'interaction (303) par rapport aux données LiDAR (301) afin de permettre aux données d'interaction (303) d'être utilisées pour classer l'au moins une partie de l'objet (117).

2. Appareil selon la revendication 1, dans lequel la classification de l'au moins une partie de l'objet comprend au moins l'un de : un type de l'au moins une partie de l'objet, une fonction de l'au moins une partie de l'objet, ou une configuration de l'au moins une partie de l'objet.

3. Appareil selon l'une quelconque des revendications précédentes, dans lequel la classification de l'au moins une partie de l'objet est utilisée pour contrôler le rendu d'une ou plusieurs fonction(s) de réalité retransmise par le dispositif de réalité retransmise.

4. Appareil selon la revendication 3, dans lequel le contrôle du rendu des fonctions de réalité retransmise comprend au moins l'un : du contrôle d'une position respective d'une ou plusieurs image(s) de réalité retransmise affichée(s) par rapport à la position de l'au moins une partie de l'objet, du contrôle de la mise à l'échelle d'une ou plusieurs image(s) de réalité retransmise par rapport à la position de l'au moins une partie de l'objet, de l'affichage d'une ou plusieurs image(s) de réalité retransmise liée(s) à l'interaction de l'utilisateur avec l'au moins une partie de l'objet, du fait de prévoir une zone d'entrée utilisateur à un emplacement par rapport à l'au moins une partie de l'objet, du fait d'empêcher les entrées utilisateur à un emplacement par rapport à l'au moins une partie de l'objet.

5. Appareil selon la revendication 4, dans lequel au moins l'un de la mise à l'échelle ou du positionnement de la ou des image(s) de réalité retransmise est effectué à l'aide d'une transformation d'espace latente de l'objet qui transforme une représentation de l'objet d'un premier objet en un objet cible.

6. Appareil selon l'une quelconque des revendications 4 à 5, dans lequel les images de réalité retransmise comprennent des informations relatives à la classification de l'au moins une partie de l'objet.

7. Appareil selon l'une quelconque des revendications précédentes, dans lequel les données de position sont obtenues auprès d'au moins l'une d'une unité de mesure inertielle, ou de données LiDAR.

8. Appareil selon l'une quelconque des revendications précédentes, dans lequel les données d'interaction sont également obtenues auprès d'au moins un ou plusieurs : d'extensomètres portatifs couplés à une partie de l'utilisateur, de capteurs de lumière.

9. Appareil selon l'une quelconque des revendications précédentes, dans lequel ou l'interaction avec l'au moins une partie de l'objet comprend au moins l'un de : l'utilisateur qui touche l'au moins une partie de l'objet, l'utilisateur qui applique une force sur l'au moins une partie de l'objet, l'utilisateur qui déplace l'au moins une partie de l'objet, l'utilisateur qui tient l'au moins une partie de l'objet, l'utilisateur qui saisit l'au moins une partie de l'objet.

10. Appareil selon l'une quelconque des revendications précédentes, dans lequel le moyen est destiné à obtenir des données d'interaction pour une pluralité de parties de l'objet et pour utiliser des données de position correspondantes pour permettre la classification de la pluralité de parties de l'objet.

11. Dispositif comprenant un appareil selon l'une quelconque des revendications précédentes.

12. Dispositif selon la revendication 11, dans lequel le dispositif comprend au moins l'un de : un dispositif de réalité retransmise, un dispositif utilisateur électronique.

13. Procédé comprenant :
l'obtention (201) de données LiDAR (301) auprès d'un dispositif de réalité retransmise (103), dans lequel le dispositif de réalité retransmise (103) est utilisé par un utilisateur et les données LiDAR (301) comprennent des points de données qui représentent au moins une partie d'un objet (117) ;
l'obtention (203) de données de position relatives à une position de la main de l'utilisateur par rapport à l'au moins une partie de l'objet (117) ;
l'obtention (205) de données d'interaction (303) qui indiquent la manière dont la main de l'utilisateur interagit avec l'au moins une partie de l'objet (117), dans lequel au moins certaines des données d'interaction (303) sont obtenues auprès d'un dispositif d'électromyographie (105) couplé à l'utilisateur ; et
l'utilisation des données de position pour cartographier (207) les données d'interaction (303) par rapport aux données LiDAR (301) afin de permettre aux données d'interaction (303) d'être utilisées pour classer l'au moins une partie de l'objet (117) .

14. Procédé selon la revendication 13, dans lequel la classification de l'au moins une partie de l'objet comprend au moins l'un de : un type de l'au moins une partie de l'objet, une fonction de l'au moins une partie de l'objet, ou une configuration de l'au moins une partie de l'objet.

15. Programme informatique (507) comprenant des instructions qui, lorsqu'elles sont exécutées par un appareil (107), permettent à l'appareil (107) d'effectuer au moins :
l'obtention (201) de données LiDAR (301) auprès d'un dispositif de réalité retransmise (103), dans lequel le dispositif de réalité retransmise (103) est utilisé par un utilisateur et les données LiDAR (301) comprennent des points de données qui représentent au moins une partie d'un objet (117) ;
l'obtention (203) de données de position relatives à une position de la main de l'utilisateur par rapport à l'au moins une partie de l'objet (117) ;
l'obtention (205) de données d'interaction (303) qui indiquent la manière dont la main de l'utilisateur interagit avec l'au moins une partie de l'objet (117), dans lequel au moins certaines des données d'interaction (303) sont obtenues auprès d'un dispositif d'électromyographie (105) couplé à l'utilisateur ; et
l'utilisation des données de position pour cartographier (207) les données d'interaction (303) par rapport aux données LiDAR (301) afin de permettre aux données d'interaction (303) d'être utilisées pour classer l'au moins une partie de l'objet (117).
